# EUROPÄISCHE PATENTSCHRIFT

(11) **EP 2 115 699 B1**
(45) Veröffentlichungstag und Bekanntmachung des Hinweises auf die Patenterteilung: **10.10.2012**
(21) Anmeldenummer: 08700845.4
(22) Anmeldetag: 07.01.2008
(51) Int. Cl.: G06K 9/00, G06T 7/20

(54) **VERFAHREN ZUR SELBSTTÄTIGEN ANALYSE VON OBJEKTBEWEGUNGEN**
METHOD FOR THE AUTOMATIC ANALYSIS OF OBJECT MOVEMENTS
PROCÉDÉ D'ANALYSE AUTOMATIQUE DE MOUVEMENTS D'OBJETS

(30) Priorität: 08.01.2007 DE 102007001273
(43) Veröffentlichungstag der Anmeldung: 11.11.2009
(73) Patentinhaber: Vitracom AG, 76133 Karlsruhe (DE)
(72) Erfinder: WETZEL, Claus, 76228 Karlsruhe (DE); LINK, Norbert, 76187 Karlsruhe (DE)
(74) Vertreter: Geitz Truckenmüller Lucht
(86) Internationale Anmeldenummer: PCT/DE2008/000009
(87) Internationale Veröffentlichungsnummer: WO 2008/083663

(56) Entgegenhaltungen:
- DE-A1- 10 235 657
- US-A1- 2001 043 721
- CEDRAS C ET AL: "MOTION-BASED RECOGNITION: A SURVEY" IMAGE AND VISION COMPUTING, GUILDFORD, GB, Bd. 13, Nr. 2, 1. März 1995 (1995-03-01), Seiten 129-155, XP001159713 ISSN: 0262-8856
- ALLMEN M ET AL: "Long-range spatiotemporal motion understanding using spatiotemporal flow curves" PROCEEDINGS OF THE COMPUTER SOCIETY CONFERENCE ON COMPUTER VISION AND PATTERN RECOGNITION. LAHAINA, MAUI, HAWAII, JUNE 3 - 6, 1991; [PROCEEDINGS OF THE COMPUTER SOCIETY CONFERENCE ON COMPUTER VISION AND PATTERN RECOGNITION], LOS ALAMITOS, IEEE. COMP., Bd. -, 3. Juni 1991 (1991-06-03), Seiten 303-309, XP010023224 ISBN: 978-0-8186-2148-2
- JUNXIAN WANG ET AL: "Overtaking Vehicle Detection Using Dynamic and Quasi-Static Background Modeling" COMPUTER VISION AND PATTERN RECOGNITION, 2005. CVPR 2005. IEEE COMPUTE R SOCIETY CONFERENCE ON SAN DIEGO, CA, USA 20-26 JUNE 2005, PISCATAWAY, NJ, USA,IEEE, Bd. 3, 20. Juni 2005 (2005-06-20), Seiten 64-64, XP010870059 ISBN: 978-0-7695-2372-9

## Beschreibung

Die Erfindung betrifft ein Verfahren zur selbsttätigen Analyse von Objektbewegungen innerhalb eines Betrachtungsbereichs.

Solche Verfahren sind bereits bekannt, etwa aus der USamerikanischen Patentschrift US 6,366,701 B1. Dort wird beschrieben, dass zur Objektverfolgung über eine Bildfolge hinweg zunächst der optische Fluss der Bildfolge bestimmt und anschließend eine Vorhersage über die Position künftiger Bildpunkte eines zunächst zu bestimmenden Objekts getroffen wird.

Die Bewegungsanalyse in Folgen digitaler Bilder stellt darin eine zentrale Aufgabe dar. Bewegung im Sinne dieser Betrachtungsweise ist die regelmäßige Verschiebung von Farb- oder Grauwerten zwischen aufeinander folgenden Bildern einer Bildfolge. Diese werden durch Verschiebungsvektoren bezüglich des ursprünglichen Bildpunktes (Pixels) gekennzeichnet. Bewegungsvektorfelder werden z.B. mittels des optischen Flusses in solchen Bildfolgen gebildet und charakterisieren die Bewegungen der einzelnen Bildpunkte. Bewegungsvektorfelder werden in herkömmlichen Verfahren durch Bildpunktabgleiche, die Verfolgung charakteristischer Merkmale oder differentielle Methoden gewonnen.

Derart bestimmte Bewegungsvektorfelder werden im nächsten Schritt dadurch unterteilt, dass die einzelnen Bewegungsvektoren in Objekten zusammengefasst und das Objekt als Ganzes weiter betrachtet, insbesondere seine Bewegung entlang einer Trajektorie verfolgt wird.

In heute gängigen Verfahren werden Bewegungen von Objekten anhand von deren Trajektorien analysiert. Dazu müssen zunächst Objekte anhand gemeinsamer Merkmale im Bild ermittelt, den Objekten daraufhin Bezugspunkte zugewiesen und letztere über mehrere Bilder verfolgt werden. Die Verbindungslinie zwischen den Objektbezugspunkten bildet dann den zurückgelegten Pfad (die Trajektorie) des Objekts. Voraussetzung ist dabei, dass die Kamera statisch in Bezug auf den Betrachtungsbereich ist oder die Kamerabewegung kompensiert ist, d.h. die Beziehung zwischen den dann wechselnden Betrachtungsbereichen bekannt ist. Als Merkmale für die Bildung von Objekten werden z.B. objekttypische Grauwert oder Farben verwendet (z.B. Hautfarbe für Gesichter).

Zusammenhängende objekttypische Bildpunkte werden zur Objektbildung zu Clustern zusammengefasst und deren Lage durch ausgezeichnete Punkte (z.B. Schwerpunkt) gekennzeichnet.

Als weitere Merkmale werden Texturen benutzt oder die Tatsache, dass sich Grauwert oder Farbe eines Bildpunkts geändert haben.

Ferner wird die Verschiebung einzelner Bildpunkte zwischen aufeinander folgenden Bildern als Merkmal der Objekte herangezogen.

Einen überblick bietet C. Cédras, M. Shah : "Motion-based recognition: a survey", Image and Vision Computing, Vol. 13, Nr. 2, 1995, pp. 129 - 155.

Vor diesem Hintergrund liegt der vorliegenden Erfindung die Aufgabe zu Grunde, ein Verfahren zur selbsttätigen Analyse von Objektbewegungen innerhalb eines Betrachtungsbereichs zu schaffen, welches auf den Zwischenschritt einer Objektbildung verzichtet.

Dies gelingt mit dem Verfahren zur selbsttätigen Analyse von Objektbewegungen gemäß den Merkmalen des Hauptanspruchs. Weitere sinnvolle Ausgestaltungen des Verfahrens können den Unteransprüchen entnommen werden.

Erfindungsgemäß wird, analog zu bekannten Verfahren, zunächst ein Bewegungsvektorfeld bestimmt, welches die Bewegungen einzelner Bildpunkte charakterisiert. Das Bewegungsvektorfeld besteht aus einzelnen Bewegungsvektoren, welche im Folgenden zu im Betrachtungsbereich verlaufenden Geometriemodellen zugeordnet werden. Ein Geometriemodell beschreibt einen möglichen Bewegungspfad eines Objekts im Betrachtungsbereich. Es liegt im allgemeinen eine Vielzahl von Geometriemodellen vor, so dass ein vergleich der Bewegungsvektoren mit einer Mehrzahl in Frage kommender Bewegungspfade erfolgen kann. Im Fokus der Betrachtung stehen gleichzeitig sämtliche Geometriemodelle, für welche gleichzeitig Geschwindigkeitsdiagramme erstellt werden. Anhand dieser Geschwindigkeitsdiagramme lässt sich die Bewegung des Objekts entlang des Bewegungspfads eines Geometriemodells auch hinsichtlich des Raum-/Zeit-Aspekts, also insbesondere der Geschwindigkeit, charakterisieren.
Durch Vergleiche des Weg-Zeitdiagramms mit Geschwindigkeitsmodellen kann abschließend eine Einordnung einer Objektbewegung in ein Bewegungsmodell vorgenommen werden.

Ein Bewegungsmodell ist also aus einem Geometriemodell und einem Geschwindigkeitsmodell zusammengesetzt, so dass bei einer diskreten Objektbewegung zunächst eine Zuordnung zu einem Geometriemodell erfolgen muss, für welches ein Weg-Zeitdiagramm erfasst wird. Aufgrund der Zuordnung zu einem Geometriemodell ist die Bewegung eines Objekts in dem Weg-Zeitdiagramm vermerkt. Der zweite Teil des Bewegungsmodells, bestehend aus einem Geschwindigkeitsmodell, kommt erst im zweiten Schritt ins Spiel und charakterisiert nicht den Weg der Bewegung, sondern setzt diesen in Bezug zum Zeitaspekt.

Das Bewegungsvektorfeld, welches die Berechnungsgrundlage für die Objektbewegungen und die Grundlage für eine Zuweisung von Objektbewegungen zu einem Geometriemodell darstellt, wird mit Vorteil nach jedem Bildwechsel neu bestimmt, wobei durchaus im Wege geeigneter Verfahren auf frühere Ergebnisse zurückgegriffen werden kann. Es kann im Rahmen der Bestimmung des Bewegungsvektorfelds für einzelne, bestimmte Bildpunkte auch auf die Bestimmung eines Bewegungsvektors verzichtet werden, wenn etwa eine Bewegung in diesen Punkten nicht zu erwarten ist.

Eine Bildfolgenanalyse kann mit besonderem Vorteil nach dem von Lukas und Kanade vorgeschlagenen Verfahren erfolgen. Diesem Algorithmus liegt die Überlegung zugrunde, dass sich die Grauwerte als Funktion der Koordinaten des Kamerabildes lediglich durch Positionswechsel verändern.

Die Abtastung der Bildfolge in räumlicher und/oder zeitlicher Hinsicht kann gemäß einer Hierarchie von Unterabtastungen, gemäß einer so genannten Auflösungspyramide erfolgen. Dabei kommen ebenfalls unterabgetastete Bewegungsmodelle zum Einsatz. So kann beispielsweise bei langsamen Bewegungen nur jedes zweite Bild abgetastet werden oder bei schnellen Bewegungen nur Teilbilder ausgewertet werden. Hierdurch wird die zu verarbeitende Datenmenge drastisch reduziert und somit mit Vorteil entweder die Geschwindigkeit der Analyse der Objektbewegung erhöht oder die Prozessoraktivität reduziert. Beides ist angesichts der hier in Rede stehenden Datenmengen eine wertvolle Verbesserung.

Zentrales Werkzeug der Geometriemodelle ist eine Trajektorie, welche entlang des im Rahmen des Geometriemodells betrachteten Bewegungspfads verläuft. Ein Objekt, welches den Betrachtungsbereich durchquert, folgt dabei einem zunächst beliebigen Bewegungspfad. Ziel des erfindungsgemäßen Verfahrens muss zur Erfassung der Objektbewegung unter anderem sein, diesen Bewegungspfad zu erfassen. Dies wird dadurch gelöst, dass eine Mehrzahl von Geometriemodellen bereitgehalten und durch Vergleich der tatsächlichen Bewegung mit den Geometriemodellen ein Grad der Übereinstimmung mit wenigstens einem der Geometriemodelle ermittelt und dadurch der Bewegungspfad identifiziert wird.

Die Trajektorie, der das Objekt im Rahmen seiner Bewegung folgt, hat die Länge L und ist mit besonderem Vorteil in N gleich weite Intervalle unterteilt. Dies ermöglicht es, die Trajektorie für einzelne Bereiche, also die einzelnen Intervalle, getrennt zu betrachten.

Für eine Erfassung einer Bewegung entlang einer Trajektorie wird die Bestimmung eines Zustimmungsmaßes erfordert, welches die Zugehörigkeit bzw. Übereinstimmung eines Bewegungsvektors im Betrachtungsbereich zu einem Geometriemodell, mithin einer Trajektorie, charakterisiert. Diese Zustimmung muss nicht notwendigerweise lediglich in der Entscheidung "Zustimmung" oder "Keine zustimmung" bestehen. Vielmehr wird für ein Geometriemodell, gegebenenfalls auch für mehrere oder alle Geometriemodelle, zu jedem Bewegungsvektor ein Zustimmungsmaß ermittelt.

Dies erfolgt durch die Bildung eines Wahrscheinlichkeitsraums für den künftigen Bewegungsvektor. Der wahrscheinlichste Bewegungsvektor nimmt in dem Wahrscheinlichkeitsraum den Betrag 1 an. Diesem wird der tatsächliche Bewegungsvektor der Richtung nach einbeschrieben, wobei der Betrag des tatsächlichen Bewegungsvektors kleiner oder gleich 1 ist. Das Zustimmungsmaß ergibt sich aus dem Verhältnis zwischen wahrscheinlichstem und tatsächlichem Bewegungsvektor als Wert von 0 bis 1.

Es erfolgt nun eine kumulative Zuweisung des Zustimmungsmaßes des Bewegungsvektors zu den Trajektorien, wobei es denkbar ist, das Zustimmungsmaß jeweils nur derjenigen Trajektorie zuzuweisen, welcher das höchste Zustimmungsmaß zukommt, oder aber bevorzugtermaßen jeder Trajektorie das für sie ermittelte Zustimmungsmaß zuzuordnen.

Einer Trajektorie kann dabei das Zustimmungsmaß eines Bewegungsvektors dadurch zugeordnet werden, dass das dem Bewegungsvektor am nächsten gelegene Intervall der Trajektorie ermittelt wird und einem diesem Intervall zugeordneten Zustimmungszähler das Zustimmungsmaß aufaddiert wird.

Die Gesamtheit aller Intervalle einer Trajektorie kann im Folgenden ihrerseits als Vektor der Dimension N aufgefasst werden, der die gesamten Zustimmungsmaße zu einem Geometriemodell enthält. Da ein Bewegungsvektorfeld im Prinzip eine Momentaufnahme darstellt, kann ein solcher Vektor, im Folgenden "Zustimmungsvektor" genannt, einem bestimmten Zeitpunkt t zugeordnet werden. Ein Zusammenschluss einer Vielzahl solcher Zustimmungsvektoren zu einer Matrix A führt somit zu einer dauerhaften Betrachtung des jeweiligen Geometriemodells, mithin zu einer Betrachtung desselben über einen Zeitabschnitt hinweg.
In einer Darstellung, in der die Zustimmungsvektoren zeitlich geordnet sind, lässt sich aus ihnen ein Weg- zeitdiagramm ableiten, in welchem der Weg über der Zeit aufgetragen wird. Durch Vergleiche dieses Weg- Zeitdiagramms, welches den tatsächlichen Bewegungsverlauf zeigt, mit dem Geometriemodell zugeordneten Geschwindigkeitsmodellen lässt sich eine Zugehörigkeit zu einem Bewegungsmodell ermitteln.

Dabei kann auch hier die Zugehörigkeit auf einer eindeutigen Entscheidung beruhen, oder aber bevorzugtermaßen auf einer graduellen Einordnung. Hierdurch kann eine Objektbewegung - zu unterschiedlichen Graden - mehreren Bewegungsmodellen entsprechen.

Eine eindeutige Zuordnung kann mithin angenommen werden, wenn der Grad der Zugehörigkeit zu einem bestimmten Bewegungsmodell einen Schwellenwert überschreitet, der zwar frei festgelegt werden kann, vorzugsweise aber bei 90% liegt.

Die Geometriemodelle und Geschwindigkeitsmodelle können bei dem vorstehend beschriebenen Verfahren sowohl vorab bereits vorliegen, also in hier nicht weiter interessierender Weise ermittelt worden sein, oder aber bei Bedarf ermittelt oder dynamisch angepasst werden.

Bei einer Anpassung kommt etwa die Anpassung eines Geschwindigkeitsmodells in Frage, etwa wenn insoweit eine Abweichung besteht, dass ein Objekt seine Bewegung lediglich unterbricht, oder ähnliches. Auch können Bewegungsmodelle selbsttätig anhand von Beispielsequenzen gelernt oder aus Kamera-, Objekt- und/oder anderen Bewegungsmodellen berechnet werden.

In einer bevorzugten Ausführung ist die Kamera zur Erfassung der Bewegung selbst im Sinne einer ruhenden Lage stabilisiert oder idealerweise völlig statisch in Bezug auf den Betrachtungsbereich. In diesem Fall kann eine Kompensation einer Kamerabewegung, welche jedoch durchaus auch möglich ist, zur Aufwandsminimierung entfallen.

Das vorstehend beschriebene erfindungsgemäße Verfahren wird im Nachfolgenden anhand eines Ausführungsbeispiels näher erläutert.

Es zeigen:
- Fig. 1: einen Betrachtungsbereich mit einem Objekt, welches einer Trajektorie folgt, in einer Draufsicht,
- Fig. 2: eine schematische Darstellung eines Wahrscheinlichkeitsraums mit einbeschriebenem Bewegungsvektor und wahrscheinlichstem Bewegungsvektor,
- Fig. 3: ein Weg-Zeit-Diagramm mit drei Geschwindigkeitsmodellen,
- Fig. 4: ein Geschwindigkeitsdiagramm mit drei Bewegungsspuren, und
- Fig. 5: das Geschwindigkeitsdiagramm gemäß Fig. 4, dem die Geschwindigkeitsmodelle aus Fig. 3 überlagert sind.

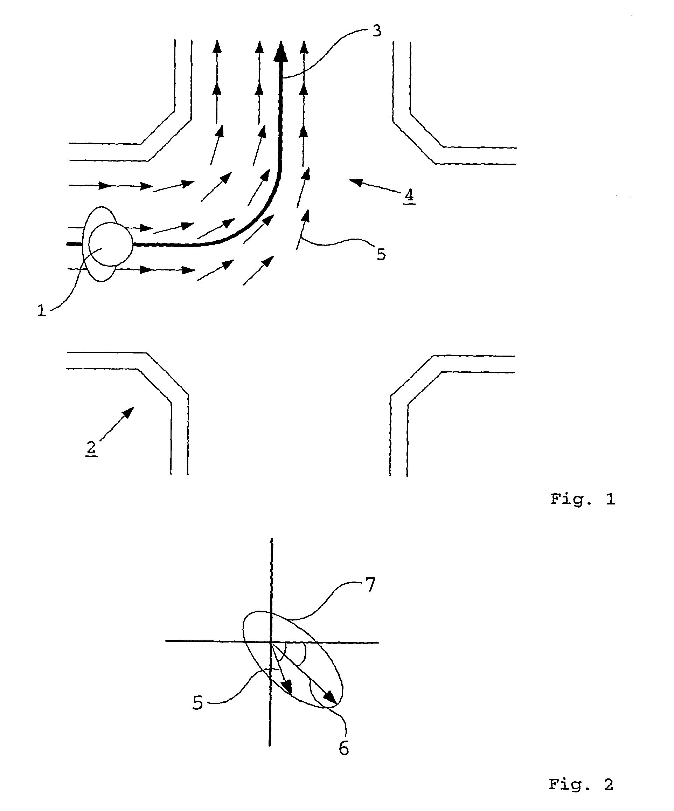

Figur 1 zeigt in einer Draufsicht einen Betrachtungsbereich 2 einer nach dem erfindungsgemäßen Verfahren zu erfassenden Straßenkreuzung. In dem Betrachtungsbereich 2 verläuft eine Vielzahl von Geometriemodellen, denen zu erfassende Objekte 1, nämlich etwa Fußgänger, räumlich folgen. Durch die Bewegung der Objekte 1 werden in sukzessive mit einer Kamera von dem Betrachtungsbereich 2 aufgenommenen Bildern, welche zu einer Bildfolge zusammenfügbar sind, Bewegungsabläufe eingeprägt, welche durch geeignete Bewegungsanalyseverfahren, etwa dem Verfahren nach Lukas und Kanade, bildpunktweise in Bewegungsvektoren 5 umgesetzt werden. Auf diese weise entsteht eine Momentaufnahme des Betrachtungsbereichs 2 mit einem Bewegungsvektorfeld 4, in dem die im Aufnahmezeitpunkt t herrschenden Bewegungen festgehalten sind.

Das Objekt 1 folgt in Figur 1 der Trajektorie 3, welche einen zu einem Geometriemodell gehörenden Bewegungspfad darstellt. Die abseits der Trajektorie 3 liegenden Bewegungsvektoren 5 können dieser aufgrund eines Zustimmungsmaßes zugewiesen werden, welches für jeden einzelnen Bewegungsvektor 5 und jedes Geometriemodell bestimmbar ist.

Die Bestimmung des Zustimmungsmaßes zu einem Geometriemodell kann anhand von Figur 2 nachvollzogen werden, welche hierzu ein Achsenkreuz zeigt. In diesem ist ein Wahrscheinlichkeitsraum 7 definiert, welcher für jeden Einzelfall bestimmt wird und in dem die für eine eindeutige Zugehörigkeit zu der korrespondierenden Trajektorie 3 erforderliche Richtung von einem Normvektor eingenommen wird. Dieser Normvektor mit dem Betrag 1 stellt den im Fall einer Verfolgung der entsprechenden Trajektorie 3 wahrscheinlichsten Bewegungsvektor 6 dar. Ebenfalls ist der tatsächliche Bewegungsvektor 5 aus dem Bewegungsvektorfeld 4 des Betrachtungsbereichs 2 aufgetragen, welcher vorliegend von dem wahrscheinlichsten Bewegungsvektor 6 abweicht. Das Zustimmungsmaß ergibt sich durch das Verhältnis der Beträge beider Vektoren 5,6 und liegt im Zahlenbereich von 0 bis 1.

Mit dem so ermittelten Zustimmungsmaß wird die Trajektorie 3 beaufschlagt. Die Trajektorie 3 wird dazu ihrer Länge L nach in N gleich weite Intervalle unterteilt. Jedem dieser Intervalle wird ein Zustimmungszähler zugeordnet. Die Zustimmungsmaße der einzelnen Bewegungsvektoren 5 werden demjenigen Zustimmungszähler der Trajektorie 3 aufaddiert, welcher dem zum Bewegungsvektor 5 gehörenden Bildpunkt zugeordnet ist.

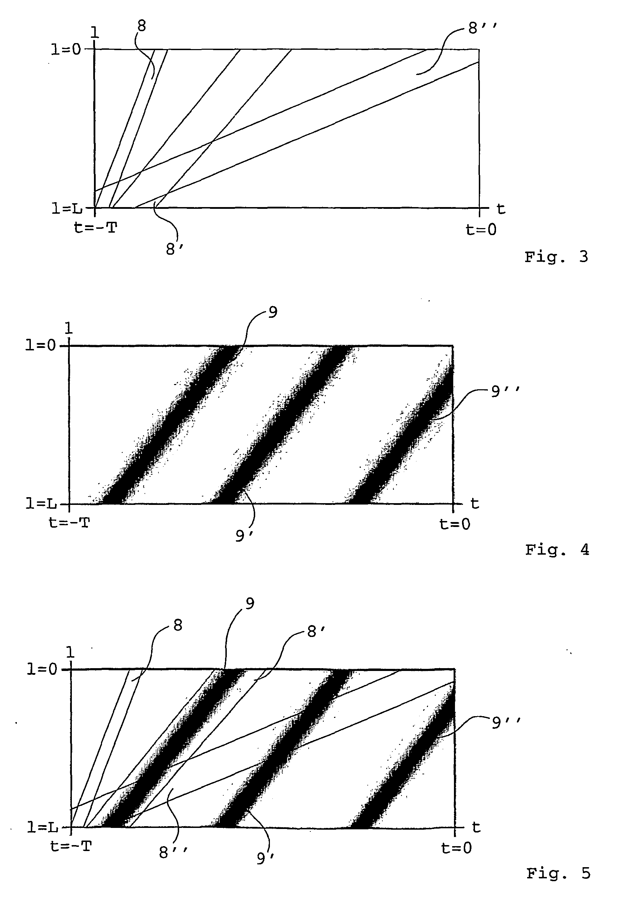

Im Folgenden werden die Intervalle der Trajektorie 3 als N-dimensionaler Zustimmungsvektor interpretiert, welcher ein Bewegungsbild zu einem diskreten Zeitpunkt t verkörpert. Durch eine Aneinanderreihung mehrerer solcher Zustimmungsvektoren über mehrere Zeitpunkte hinweg wird eine Matrix A gebildet, in welcher jede Spalte einem Zeitpunkt t entspricht. Die Matrix A kann nunmehr als Weg-zeitdiagramm aufgefasst werden, in welchem aufgrund der Zustimmungsmaße der einzelnen Bewegungsvektoren 5 Bewegungsspuren 9,9',9" einbeschrieben sind. Dies ist in Figur 4 dargestellt. Auf der Hochachse ist dabei die entlang der Trajektorie 3 zurückgelegte Wegstrecke vom Anfangspunkt 0 der Trajektorie 3 bis zu ihrem Endpunkt L, auf der Längsachse die Zeit aufgetragen. Je größer das Zustimmungsmaß in einem der so koordinierten Punkte, desto intensiver ist an dieser Stelle die Färbung, so dass entlang der Bewegungsspuren 9,9',9" Punktewolken entstehen. In diesem Fall hat sich über die Zeit t zunächst ein Objekt 1 gleichförmig entlang der Trajektorie 3 bewegt und die Bewegungsspur 9 erzeugt. Zwei weitere Objekte 1 sind in einigem zeitlichem Abstand gefolgt und in der gleichen Geschwindigkeit ebenso gleichförmig entlang der Trajektorie 3 gefolgt.

Im Falle einer ungleichmäßigen Geschwindigkeit würden die Bewegungsspuren 9,9',9" ihre Form dahingehend ändern, dass eine geringere Geschwindigkeit eine Abflachung, eine größere Geschwindigkeit einen Anstieg der Kurve bedeutet.

Dem Verfahren sind neben den Geometriemodellen auch die in Figur 3 in das zuvor dargestellte Weg-Zeit-Diagramm eingetragenen Geschwindigkeitsmodelle 8,8',8" zugrunde gelegt, welche den Bewegungsspuren 9,9',9" prinzipiell entsprechen. Die in Figur 4 dargestellten Bewegungsspuren 9,9',9" werden in einem letzten Schritt gemäß Figur 5 mit den Geschwindigkeitsmodellen verglichen und es wird eine graduelle Zuordnung der Bewegungsspuren 9,9',9" zu den Geschwindigkeitsmodellen 8,8',8" angestellt.

Sobald diese Zuordnung vorliegt, ist eine Bewegung eines Objekts im Betrachtungsbereich 2 einem aus Geometriemodell und Geschwindigkeitsmodell 8,8',8" bestehenden Bewegungsmodell zugeordnet.

Somit ist vorstehend ein Verfahren zur selbsttätigen Erfassung von Objektbewegungen beschrieben, bei dem die einzelnen Bewegungsvektoren in dem Betrachtungsbereich angelegten Geometriemodellen zugeordnet werden, Geschwindigkeitsdiagramme aus einer solchen Wertzuweisung erstellt und mit Geschwindigkeitsmodellen verglichen werden. Somit kann auf eine Identifizierung diskreter Objekte verzichtet werden.

### BEZUGSZEICHENLISTE

- 1: Objekt
- 2: Betrachtungsbereich
- 3: Trajektorie
- 4: Bewegungsvektorfeld
- 5: Bewegungsvektor
- 6: Wahrscheinlichster Bewegungsvektor
- 7: Wahrscheinlichkeitsraum
- 8, 8', 8": Geschwindigkeitsmodell
- 9, 9' ,9": Bewegungsspur

## Patentansprüche

1. Verfahren zur selbsttätigen Analyse von Objektbewegungen innerhalb eines Betrachtungsbereichs (2), umfassend die Schritte
- Erfassung des Betrachtungsbereichs (2) von einem Kamerabild zumindest einer Kamera,
- Bestimmung eines mit dem Kamerabild korrespondierenden Bewegungsvektorfelds (4),
- Zuordnung von Vektoren des Bewegungsvektorfelds (4) zu im Betrachtungsbereich (2) verlaufenden, bereits vor Verfahrensbeginn vorliegenden Geometriemodellen, welche durch eine Trajektorie einen Bewegungspfad eines Objekts (1) im Betrachtungsbereich (2) beschreiben,
- Bestimmung jeweils zumindest eines einem Geometriemodell zugeordneten Geschwindigkeitsdiagramms, welches eine zweidimensionale Darstellung von Zustimmungsvektoren in einem Weg-Zeit-Diagramm ist, wobei die Zustimmungsvektoren bei der Zuordnung der Vektoren des Bewegungsvektorfeldes zu den Trajektorien der Geometriemodelle entstehen,
wobei durch Vergleich des Geschwindigkeitsdiagramms mit einer Schar von vorgegebenen Geschwindigkeitsmodellen (8,8',8"), welche die Geschwindigkeit eines Objekts (1) entlang eines Bewegungspfads beschreiben, eine Zuordnung von Objektbewegungen zu Bewegungsmodellen vorgenommen wird, welche Bewegungsmodelle jeweils durch ihr Geometriemodell und ihr Geschwindigkeitsmodell (8,8',8") bestimmt sind.

2. Verfahren gemäß Anspruch 1, **dadurch gekennzeichnet, dass** das Bewegungsvektorfeld (4) anhand einer Mehrzahl zeitlich aufeinander folgender Kamerabilder berechnet wird, wobei, vorzugsweise allen, Bildpunkten der Kamerabilder ein Bewegungsvektor (5) zugeordnet wird.

3. Verfahren gemäß Anspruch 2, **dadurch gekennzeichnet, dass** das Bewegungsvektorfeld (4) mittels einer Bildfolgenanalyse, vorzugsweise gemäß dem Verfahren nach Lukas und Kanade, bestimmt wird.

4. Verfahren gemäß einem der Ansprüche 2 oder 3, **dadurch gekennzeichnet, dass** die zeitliche und/oder räumliche Abtastung der Bildfolge in einer Hierarchie von Unterabtastungen durchgeführt wird, für die jeweils ebenfalls unterabgetastete Bewegungsmodelle zur Anwendung kommen.

5. Verfahren gemäß einem der vorhergehenden Ansprüche, **dadurch gekennzeichnet, dass** die Geometriemodelle jeweils eine Trajektorie (3) der Länge L aufweisen, welche vorzugsweise entlang ihrer Länge L in N, vorzugsweise gleich weite, Intervalle unterteilt wird.

6. Verfahren gemäß Anspruch 5, **dadurch gekennzeichnet, dass** für jeden Bewegungsvektor (5), zumindest soweit sein Betrag größer als Null ist, ein Zustimmungsmaß zu den vorhandenen Geometriemodellen bestimmt wird, indem für wenigstens ein Geometriemodell ein Wahrscheinlichkeitsraum (7) für den Bewegungsvektor (5) bestimmt wird und dafür der Betrag des Bewegungsvektors (5) in Relation zu dem Betrag eines wahrscheinlichsten Bewegungsvektors (6) gesetzt wird.

7. Verfahren gemäß Anspruch 6, **dadurch gekennzeichnet, dass** eine Zuordnung eines Bewegungsvektors (5) zu einem oder mehreren geeigneten Geometriemodellen erfolgt, für welche jeweils ein Zustimmungswert ermittelt wurde, der jeweils über einem definierten Schwellenwert liegt.

8. Verfahren nach Anspruch 6 oder 7, **dadurch gekennzeichnet, dass** ein Bewegungsvektor (5) einer Trajektorie (3) zugeordnet wird, indem das Zustimmungsmaß des Bewegungsvektors (5) zu dem jeweiligen Geometriemodell einem Zustimmungszähler desjenigen Intervalls dessen Trajektorie (3) hinzuaddiert wird, welches dem Bildpunkt, dem der Bewegungsvektor (5) zugeordnet ist, geometrisch am nächsten liegt.

9. Verfahren gemäß einem der Ansprüche 5 bis 8, **dadurch gekennzeichnet, dass** die Zustimmungszähler der N Intervalle der Trajektorie (3) als Zustimmungsvektoren *a̅ₜ* zum Zeitpunkt t interpretiert werden, welcher sämtliche Zustimmungswerte entlang der Trajektorie (3) zum Zeitpunkt t enthält.

10. Verfahren gemäß Anspruch 9, **dadurch gekennzeichnet, dass** eine Matrix A durch Zusammenfügung von Zustimmungsvektoren *a̅ₜ* verschiedener Zeitpunkte gebildet wird, vorzugsweise dass die Zustimmungsvektoren *a̅ₜ* zudem zeitlich geordnet sind, wobei die Matrix A vorzugsweise als Weg-Zeitdiagramm interpretiert wird.

11. Verfahren gemäß Anspruch 10, **dadurch gekennzeichnet, dass** Vektoren *a_{T̅}* bis *a̅*₀ zur Matrix A zusammengefügt werden, wobei *a̅*₀ der Zustimmungsvektor zum aktuellen Zeitpunkt, und *a̅_{T}* der Zustimmungsvektor zum Zeitpunkt -T sind, wobei das langsamste zu erfassende Objekt (1) sich innerhalb der Zeit T um die Länge L der Trajektorie (3) bewegen kann.

12. Verfahren gemäß Anspruch 10 oder 11, **dadurch gekennzeichnet, dass** die Matrix A als Ringpuffer gestaltet wird, also stets nur die n letzten Zustimmungsvektoren *a̅ₜ* in ihr enthalten sind, wobei n die Zahl der insgesamt in der Matrix enthaltenen Zustimmungsvektoren *a̅ₜ* ist.

13. Verfahren gemäß einem der Ansprüche 10 bis 12, **dadurch gekennzeichnet, dass** eine Auswertung von Objektbewegungen durch einen Vergleich der für die Geometriemodelle abgeleiteten Geschwindigkeitsdiagramme mit den dem jeweiligen Geometriemodell zugeordneten, vorzugsweise bereits vor Verfahrensbeginn vorliegenden, Geschwindigkeitsmodellen (8,8',8") erfolgt.

14. Verfahren gemäß Anspruch 13, **dadurch gekennzeichnet, dass** das Ergebnis eines Vergleichs eine graduelle Zuordnung, vorzugsweise nach Prozenten, zwischen einem Geschwindigkeitsdiagramm und einem Bewegungsmodell ist.

15. Verfahren gemäß Anspruch 14, **dadurch gekennzeichnet, dass** ein Schwellenwert, vorzugsweise frei, jedoch mit dem bevorzugten Wert von 90%, festlegbar ist, bei dessen Überschreitung eine eindeutige Zuordnung einer Objektbewegung zu einem Bewegungsmodell erfolgt.

## Claims

1. A method for the automatic analysis of object movements within an observation region (2), comprising the following steps:
- covering the observation region (2) of a camera image of at least one camera,
- determining a movement vector field (4) corresponding to the camera image,
- assigning vectors of the movement vector field (4) to geometry models, which extend in the observation region (2) and are already present before the beginning of the method, which describe a movement path of an object (1) in the observation region (2) by means of a trajectory,
- respectively determining at least one velocity graph assigned to a geometry model, which is a two-dimensional representation of agreement vectors in a distance-time graph, the agreement vectors arising upon the assignment of the vectors of the movement vector field to the trajectories of the geometry model,
wherein, through comparison of the velocity graph to a multitude of predefined velocity models (8, 8', 8"), which describe the velocity of an object (1) along a movement path, an assignment of object movements to movement models is performed, which movement models are respectively determined by their geometry model and their velocity model (8, 8', 8").

2. The method according to Claim 1, **characterized in that** the movement vector field (4) is calculated on the basis of a plurality of chronologically successive camera images, preferably all pixels of the camera images being assigned to a movement vector (5).

3. The method according to Claim 2, **characterized in that** the movement vector field (4) is determined by means of an image sequence analysis, preferably according to the method according to Lukas and Kanade.

4. The method according to one of Claims 2 or 3, **characterized in that** the chronological and/or spatial scanning of the sequence is carried out in a hierarchy of subscans, for which movement models, which are respectively also subscanned, are applied.

5. The method according to one of the preceding claims, **characterized in that** the geometry models respectively have a trajectory (3) of the length L, which is preferably subdivided along its length L into N intervals, preferably of equal width.

6. The method according to Claim 5, **characterized in that** for each movement vector (5), at least if its absolute value is greater than zero, an agreement amount with the existing geometry models is determined, **in that** for at least one geometry model, a probability space (7) is determined for the movement vector (5) and the absolute value of the movement vector (5) is thus set in relation to the absolute value of a most probable movement vector (6).

7. The method according to Claim 6, **characterized in that** an assignment of a movement vector (5) to one or more suitable geometry models is performed, for which respectively an agreement value was ascertained, which respectively lies above a defined threshold value.

8. The method according to Claim 6 or 7, **characterized in that** a movement vector (5) is assigned to a trajectory (3), **in that** the agreement extent of the movement vector (5) to the respective geometry model is added to an agreement counter of the interval of its trajectory (3) which is geometrically closest to the pixel which is assigned to the movement vector (5).

9. The method according to one of Claims 5 to 8, **characterized in that** the agreement counters of the N intervals of the trajectory (3) are interpreted as the agreement vectors *a̅*₁ at the point in time t, which contains all agreement values along the trajectory (3) at the point in time t.

10. The method according to Claim 9, **characterized in that** a matrix A is formed by joining agreement vectors *a̅*₁ of various points in time, preferably, the agreement vectors *a̅*₁ are additionally chronologically ordered, the matrix A preferably being interpreted as a distance-time graph.

11. The method according to Claim 10, **characterized in that** vectors *a̅*_{T} to *a̅*₀ are joined to the matrix A, *a̅*₀ being the agreement sector at the current point in time, and *a̅_{T}* being the agreement vector at the point in time -T, the slowest object (1) to be registered being able to move by the length L of the trajectory (3) within the time T.

12. The method according to Claim 10 or 11, **characterized in that** the matrix A is designed as a ring buffer, i.e., always only the n last agreement vectors *a̅*₁ are contained therein, n being the number of the total agreement vectors *a̅*₁ contained in the matrix.

13. The method according to one of Claims 10 to 12, **characterized in that** an analysis of object movements is performed through a comparison of the velocity graphs derived for the geometry models to the velocity models (8, 8', 8") assigned to the respective geometry model, which are preferably already provided before the method beginning.

14. The method according to Claim 13, **characterized in that** the result of a comparison is a gradual assignment, preferably according to percentages, between a velocity graph and a movement model.

15. The method according to Claim 14, **characterized in that** a threshold value can be established, preferably freely, but at the preferred value of 90%, upon the exceeding of which an unambiguous assignment of an object movement to a movement model occurs.

## Revendications

1. Procédé d'analyse automatique de mouvements d'objets à l'intérieur d'une zone d'observation (2), comprenant les étapes suivantes
- couverture de la zone d'observation (2) d'une image de caméra d'au moins une caméra,
- détermination d'un champ de vecteurs de mouvement (4) correspondant à l'image de caméra,
- association de vecteurs du champ de vecteurs de mouvement (4) à des modèles de géométrie passant dans la zone d'observation (2) et déjà présents avant le début de la procédure, qui décrivent par une trajectoire un trajet de mouvement d'un objet (1) dans la zone d'observation (2),
- détermination d'au moins un diagramme de vitesse associé à chaque modèle de géométrie, qui est une représentation à deux dimensions de vecteurs d'acceptation dans un diagramme de distance dans le temps, les vecteurs d'acceptation se formant lors de l'association des vecteurs du champ de vecteurs de mouvement aux trajectoires des modèles de géométrie,
dans lequel la comparaison du diagramme de vitesse avec une cohorte de modèles de vitesse (8, 8', 8") prédéterminés, qui décrivent la vitesse d'un objet (1) le long d'un trajet de mouvement, permet de réaliser une attribution de mouvements d'objets à des modèles de mouvement, lesquels modèles de mouvement sont déterminés chacun par son modèle de géométrie et son modèle de vitesse (8, 8', 8").

2. Procédé selon la revendication 1, **caractérisé en ce que** le champ de vecteurs de mouvement (4) est calculé à l'aide d'une pluralité d'images de caméra successives dans le temps, un vecteur de mouvement (5) étant associé à des points d'image, de préférence à tous les points d'image, des images de caméra.

3. Procédé selon la revendication 2, **caractérisé en ce que** le champ de vecteurs de mouvement (4) est déterminé au moyen d'une analyse de séquences d'image, de préférence selon la méthode de Lukas et Kanade.

4. Procédé selon l'une des revendications 2 ou 3, **caractérisé en ce que** l'acquisition dans le temps et/ou l'espace de la séquence d'images est réalisée selon une hiérarchie de sous-acquisitions dont chacune utilise des modèles de mouvement faisant également l'objet d'une sous-acquisition.

5. Procédé selon l'une des revendications précédentes, **caractérisé en ce que** les modèles de géométrie présentent chacun une trajectoire (3) de longueur L, qui est de préférence divisée sur sa longueur L en N intervalles, de préférence de même largeur.

6. Procédé selon la revendication 5, **caractérisé en ce que** pour chaque vecteur de mouvement (5), du moins si sa grandeur est supérieure à zéro, une grandeur d'acceptation aux modèles de géométrie existants est déterminée par le fait que pour au moins un modèle de géométrie, un espace de vraisemblance (7) est déterminé pour le vecteur de mouvement (5) et la grandeur du vecteur de mouvement (5) est fixée en relation avec la grandeur du vecteur de mouvement le plus vraisemblable (6).

7. Procédé selon la revendication 6, **caractérisé en ce qu'**est réalisée une association d'un vecteur de mouvement (5) à un ou plusieurs modèles de géométrie, pour chacun desquels une valeur d'acceptation supérieure à un seuil défini a été déterminée.

8. Procédé selon la revendication 6 ou 7, **caractérisé en ce qu'**un vecteur de mouvement (5) est associé à une trajectoire (3) par le fait que la grandeur d'acceptation du vecteur de mouvement (5) par rapport au modèle de géométrie en question est ajoutée à un compteur d'acceptation de l'intervalle dont la trajectoire (3) est la plus proche du point d'image associé au vecteur de mouvement (5).

9. Procédé selon l'une des revendications 5 à 8, **caractérisé en ce que** les compteurs d'acceptation des N intervalles de la trajectoire (3) sont interprétés comme des vecteurs d'acceptation a̅ᵢ à l'instant t qui contient toutes les valeurs d'acceptation le long de la trajectoire (3) à l'instant t.

10. Procédé selon la revendication 9, **caractérisé en ce qu'**une matrice A est formée par l'assemblage de vecteurs d'acceptation *a̅ᵢ* de différents instants, de préférence **en ce que** les vecteurs d'acceptation *a̅ᵢ* sont en outre ordonnés dans le temps, la matrice A étant de préférence interprétée comme un diagramme de distance dans le temps.

11. Procédé selon la revendication 10, **caractérisé en ce que** des vecteurs *a̅_{T} à a̅ₒ* sont assemblés pour former la matrice A, *a̅*₀ étant le vecteur d'acceptation à l'instant actuel et *a̅_{T}* le vecteur d'acceptation à l'instant -T, l'objet (1) à acquérir le plus lent pouvant se déplacer pendant le temps T de la longueur L de la trajectoire (3).

12. Procédé selon la revendication 10 ou 11, **caractérisé en ce que** la matrice A est conçue comme une mémoire tampon circulaire, qui contient donc seulement les n derniers vecteurs d'acceptation *a̅ᵢ*, n étant le nombre total des vecteurs d'acceptation *a̅ᵢ* contenus dans la matrice.

13. Procédé selon l'une des revendications 10 à 12, **caractérisé en ce qu'**une analyse de mouvements d'objets est réalisée par une comparaison des diagrammes de vitesse dérivés pour les modèles de géométrie avec les modèles de vitesse (8, 8', 8") correspondant à chaque modèle de géométrie et de préférence présents dès le début de la procédure.

14. Procédé selon la revendication 13, **caractérisé en ce que** le résultat d'une comparaison est une association graduelle, de préférence en pourcentage, entre un diagramme de vitesse et un modèle de mouvement.

15. Procédé selon la revendication 14, **caractérisé en ce qu'**il est possible de fixer, de préférence librement mais avec une valeur préférée de 90 %, une valeur de seuil dont le dépassement donne une association univoque d'un mouvement d'objet à un modèle de mouvement.
